# EUROPEAN PATENT SPECIFICATION

(11) **EP 3 054 269 B1**
(45) Date of publication and mention of the grant of the patent: **17.01.2018**
(21) Application number: 13894902.9
(22) Date of filing: 30.09.2013
(51) Int. Cl.: G01D 5/14

(54) **ROTATION ANGLE SENSOR**
DREHWINKELSENSOR
CAPTEUR D'ANGLE DE ROTATION

(43) Date of publication of application: 10.08.2016
(73) Proprietor: Transtron Inc., Yokohama-shi, Kanagawa 222-0033 (JP)
(72) Inventor: SUGAMURA, Nobuo, Yokohama-shi Kanagawa 222-0033 (JP); KOMATSU, Yasukazu, Yokohama-shi Kanagawa 222-0033 (JP)
(74) Representative: Fenlon, Christine Lesley
(86) International application number: PCT/JP2013/076496
(87) International publication number: WO 2015/045140

(56) References cited:
- JP-A- 2006 152 831
- JP-A- 2013 113 785
- JP-A- 2013 113 785
- JP-U- H 076 721
- US-A1- 2009 107 756
- US-A1- 2012 210 816

## Description

### [Technical Field]

The disclosure is related to a rotation angle sensor.

### [Background Art]

A rotation detection apparatus is known (see Patent Literature 1, for example) in which a magnetic flux generating member is provided such that the magnetic flux generating member rotates together with a main rotation axis due to a rotation of an object to be detected, and a detection signal according to the rotation of the object is output using a magnetoelectric device that detects magnitude of the magnetic flux that changes according to the rotation of the magnetic flux generating member. Another rotation angle sensor is known from US2012/0210816.

### [Citation List]

### [Patent Literature 1]

[PTL 1] Japanese Laid-open Patent Publication No. 2004-264094

### [Summary]

### [Technical Problem]

According to the rotation detection apparatus described above, an input rotary shaft is directly inserted into the magnetic flux generating member to be held therein; however, there may be a case where a manufacturing error, etc., causes decentering of the input rotary shaft with respect to the rotation axis of the magnetic flux generating member. In such a case, when a shift between the rotation axis of the magnetic flux generating member and a sensor center is rectified, prying occurs, which may easily cause damage of the magnetic flux generating member and thus reduce durability of the magnetic flux generating member. On the other hand, if the shift between the rotation axis of the magnetic flux generating member and a sensor center is not rectified, which can prevent the damage of the magnetic flux generating member, the shift causes a reduced detection accuracy of the rotation angle.

Accordingly, it is an object of the disclosed technique to provide a rotation angle sensor that enables reducing prying due to a decentering of an input rotary shaft, while ensuring high detection accuracy of a rotation angle.

### [Solution to Problem]

According to one aspect of the disclosure, a rotation angle sensor is provided, which includes:
a first shaft member that holds an input rotary shaft with play in a first direction to rotate with the input rotary shaft, the first direction being perpendicular to the input rotary shaft;
a second shaft member that generates magnetic flux and holds the first shaft member with play in a second direction to rotate with the first shaft member, the second direction being perpendicular to the input rotary shaft and the first direction;
a rotation guide member that rotatably supports the second shaft member and defines a rotation center of the second shaft member; and
a detection element that is opposed to the second shaft member via the rotation guide member to detect the magnetic flux that changes according to a rotation angle of the second shaft member.

### [Advantageous Effects of Invention]

According to the disclosed technique, a rotation angle sensor can be obtained that enables reducing prying due to a decentering of an input rotary shaft, while ensuring high detection accuracy of a rotation angle.

### [Brief Description of Drawings]

[Fig. 1]

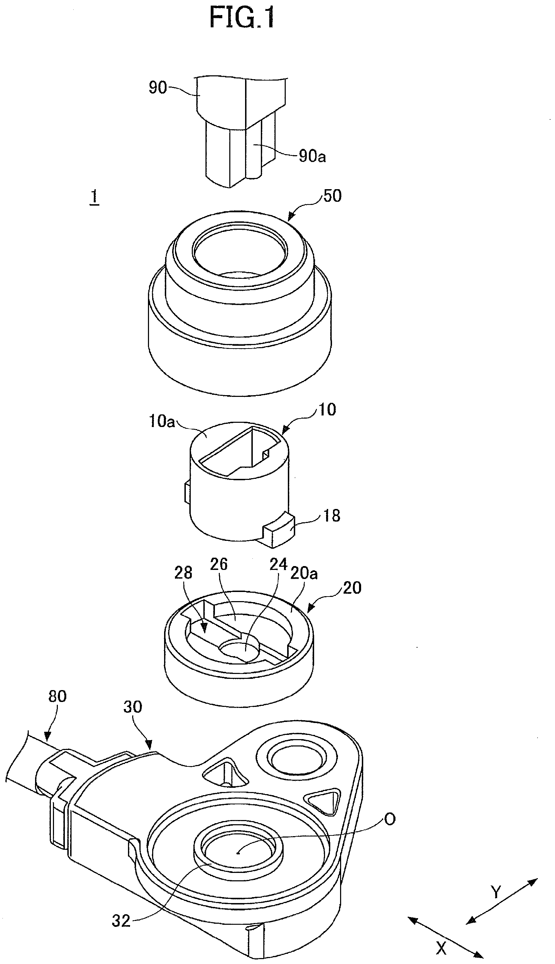

   Fig. 1 is a exploded perspective view of a rotation angle sensor 1 according to an embodiment.
[Fig.2]

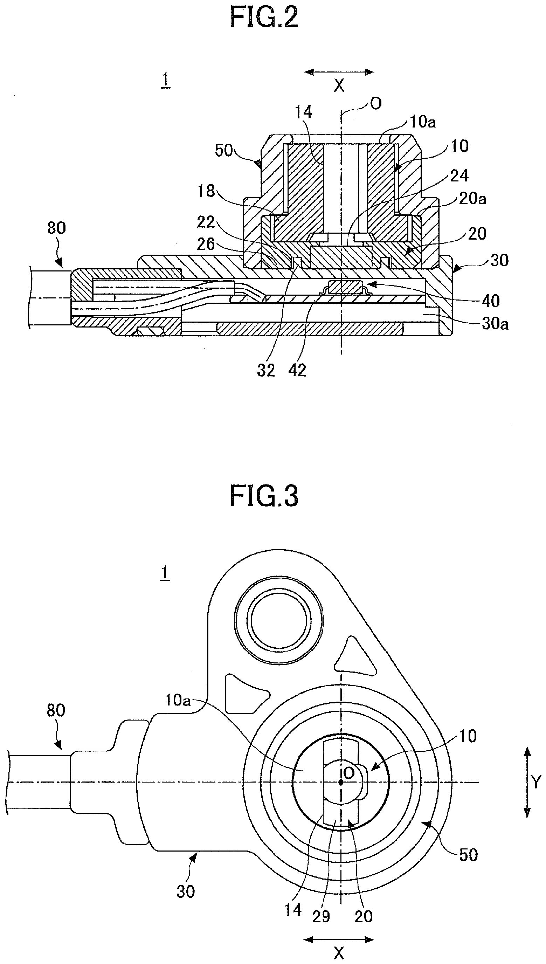

   Fig. 2 is a cross-sectional view of the rotation angle sensor 1.
[Fig.3]
   Fig. 3 is a cross-sectional view of the rotation angle sensor 1.
[Fig.4]

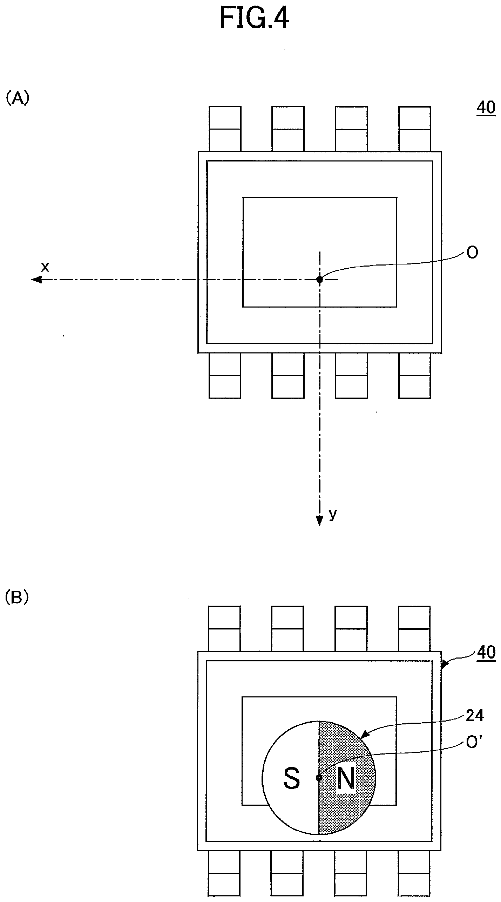

   Fig. 4 is a diagram explaining a center O of the rotation angle sensor 1.
[Fig.5]

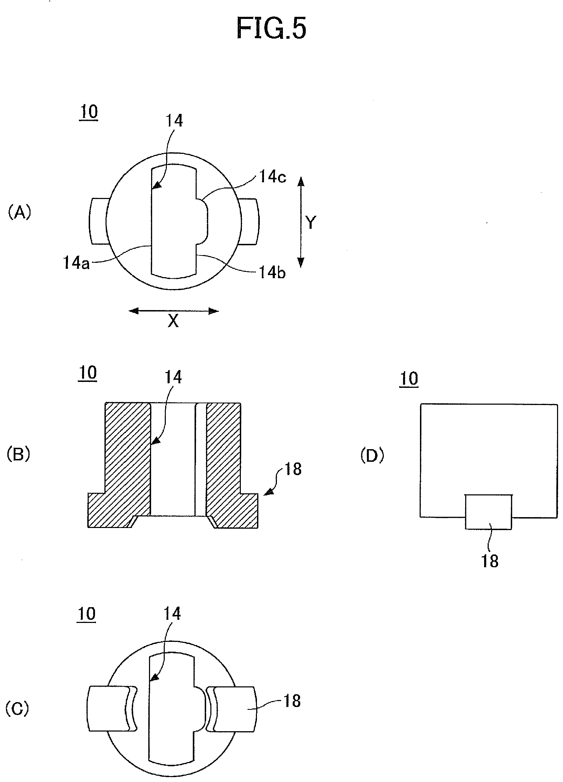

   Fig. 5 is a single item view illustrating a first shaft member 10.
[Fig.6]

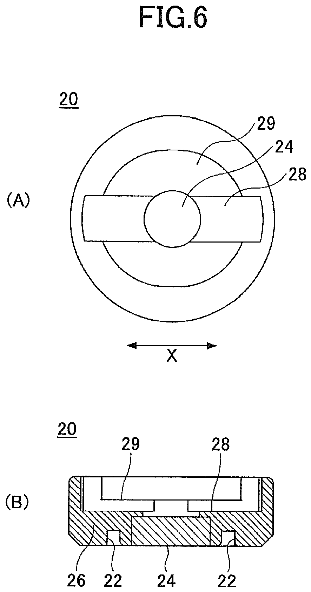

   Fig. 6 is a single item view illustrating a second shaft member 20.
[Fig.7]

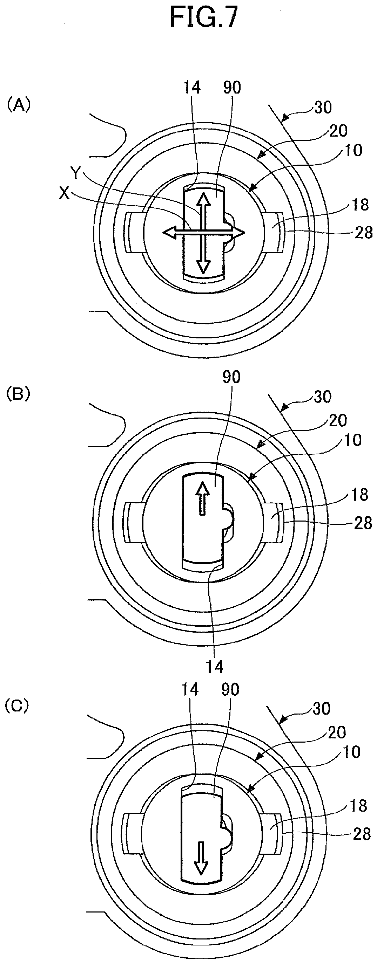

   Fig. 7 is a top view explaining a decentering state of an input rotary shaft 90 in Y direction with respect to the center O of the rotation angle sensor 1.
[Fig.8]

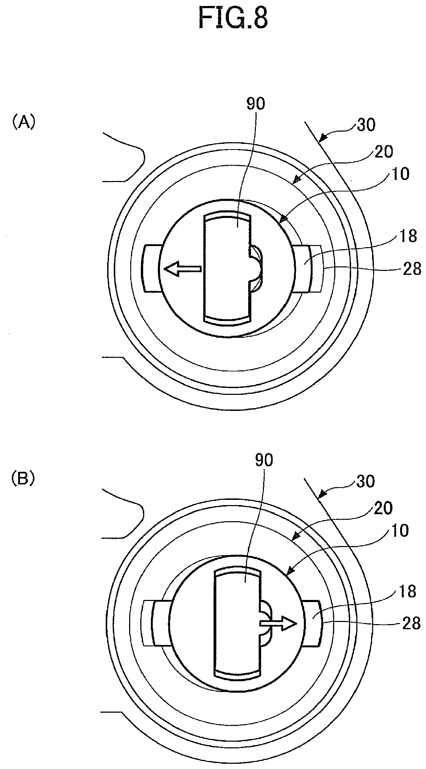

   Fig. 8 is a top view explaining a decentering state of an input rotary shaft 90 in X direction with respect to the center O of the rotation angle sensor 1.

### [Description of Embodiments]

In the following, embodiments are described in detail with reference to appended drawings.

Fig. 1 is a exploded perspective view of a rotation angle sensor 1 according to an embodiment. Fig. 2 is a cross-sectional view of the rotation angle sensor 1. Fig. 3 is a cross-sectional view of the rotation angle sensor 1. Fig. 4 is a diagram explaining a center O (i.e., a detection axis) of the rotation angle sensor 1, in which (A) is top view illustrating an example of a detection element 40, and (B) illustrates a relationship between the center O of the rotation angle sensor 1 and a center O' of a magnetic flux generating part 24. It is noted that, in Fig. 1, an example of an input rotary shaft 90 is illustrated together with the rotation angle sensor 1. In the following, an axial direction corresponds to a direction in which the input rotary shaft 90 extends. Further, Y direction and X direction are perpendicular to the axial direction, and are perpendicular to each other. Further, the rotation angle sensor 1 may be mounted in an arbitrary orientation; however, in the following, for the sake of convenience, it is assumed that an "upper side" corresponds to an upper side of the axial direction in Fig. 2. It is noted that in the present specification, "play" means play in a mechanism, and "play" is different from a clearance for a design tolerance, a manufacturing tolerance, etc.

The rotation angle sensor 1 detects a rotation angle (i.e., a rotation position) of the input rotary shaft 90. The input rotary shaft 90 may be any one of rotation members in a vehicle (including a car, a two-wheeled vehicle, construction equipment, etc.). For example, the input rotary shaft 90 may be a rotation axis of a drive mechanism (a transmission, for example), or a rotation axis of a steering mechanism (a steering shaft, for example).

As illustrated in Fig. 1, the rotation angle sensor 1 includes a first shaft member 10, a second shaft member 20, a rotation guide member 30, a detection element 40, and a lid member 50.

The first shaft member 10 may be formed of a resin. The first shaft member 10 includes a slot 14 (longer in Y direction) into which the input rotary shaft 90 is inserted. The first shaft member 10 holds the input rotary shaft 90 to rotate with the input rotary shaft 90. The first shaft member 10 holds the input rotary shaft 90 such that the input rotary shaft 90 has play in Y direction. In other words, a dimension of the slot 14 in Y direction is substantially longer than a length of an end of the input rotary shaft 90 in Y direction. With this arrangement, the input rotary shaft 90 can move in Y direction while the rotation thereof with respect to first shaft member 10 is restrained. It is noted that a range of the movement in Y direction is arbitrary, and may correspond to a range of a possible shift (decentering) amount of the input rotary shaft 90 with respect to the center O of the rotation angle sensor 1 in Y direction due to the manufacturing tolerance, etc. An example of a construction of the first shaft member 10 is described hereinafter.

The second shaft member 20 may be formed of a resin. The second shaft member 20 is provided such that the first shaft member 10 is seated on an upper surface of the second shaft member 20 in the axial direction, and a lower surface of the second shaft member 20 is seated on the rotation guide member 30. The second shaft member 20 holds the first shaft member 10 to rotate with the first shaft member 10. The second shaft member 20 holds the first shaft member 10 such that the first shaft member 10 has play in X direction. In other words, the first shaft member 10 can move in X direction while the rotation thereof with respect to the second shaft member 20 is restrained. It is noted that a range of the movement in X direction is arbitrary, and may correspond to a range of a possible shift (decentering) amount of the input rotary shaft 90 with respect to the center O of the rotation angle sensor 1 in X direction due to the manufacturing tolerance, etc.

The second shaft member 20 includes a magnetic flux generating part 24 and a body part 26.

The magnetic flux generating part 24 is provided to be concentric with the center O of the rotation angle sensor 1, and may be a circular part that is concentric with the center O of the rotation angle sensor 1, as illustrated in Fig. 2. For example, the magnetic flux generating part 24 may be equally parted in a diameter direction viewed from top such that the parted portions form a south pole and a north pole, respectively (see Fig. 4 (B)). The magnetic flux generating part 24 may be a magnet embedded in the body part 26 of the second shaft member 20. However, preferably, the magnetic flux generating part 24 may be integrally formed with the body part 26 using a resin material including magnetic particles (neodymium-based magnetic particles, for example). The body part 26 surrounds the magnetic flux generating part 24. An example of construction of the second shaft member 20 is described hereinafter.

The rotation guide member 30 may be formed of a resin. The rotation guide member 30 rotatably supports the second shaft member 20. The rotation guide member 30 guides the rotation of the second shaft member 20 to define the rotation center of the second shaft member 20. According to the invention, this guide mechanism is based on an engagement between a guide channel 22 and a protrusion 32, as illustrated in Fig. 1, etc., for example. Specifically, a surface of the rotation guide member 30 on a side on which the second shaft member 20 is seated has the protrusion 32, as illustrated in Fig. 1. The protrusion 32 has a circular form viewed along the axial direction. Further, a surface of the second shaft member 20 on a side that is seated on the rotation guide member 30 has the guide channel 22 formed therein in a circular form viewed along the axial direction. The second shaft member 20 is provided on the rotation guide member 30 such that the protrusion 32 of the rotation guide member 30 is engaged in the guide channel 22 of the second shaft member 20. With this arrangement, the second shaft member 20 can rotate and slide on the rotation guide member 30 such that the protrusion 32 is guided in the guide channel 22. At that time, a center of the rotation of the second shaft member 20 corresponds to a center of the circular shape of the guide channel 22. The circular shape of the guide channel 22 is set to have its center at the center O of the rotation angle sensor 1. With this arrangement, during the rotation of the second shaft member 20, a state in which a rotation center of the second shaft member 20 (i.e., the rotation center of the magnetic flux generating part 24) is aligned with the center O of the rotation angle sensor 1 is kept (see Fig. 4 (B)). According to the invention, the protrusion 32 has a clearance in the guide channel 22 such that the second shaft member 20 can smoothly rotate with respect to the rotation guide member 30. Further, in order to reduce the sliding resistance or increase the durability for the sliding, the rotation guide member 30 and/or the second shaft member 20 may be formed of a resin material in which polytetrafluoroethylene (PTFE) is compounded. Alternatively, from the same view point, the rotation guide member 30 and/or the second shaft member 20 may have sliding surfaces coated.

It is noted that, in the example illustrated in Fig. 1, etc., the guide mechanism based on the engagement between the guide channel 22 and the protrusion 32 is used; however, other guide mechanisms may be used. For example, the guide channel 22 may be a cylindrical column-shaped channel (concave portion) obtained by cutting away an inner portion in a radius direction. In this case, the protrusion 32 may be a cylindrical column-shaped protrusion that is engaged in the cylindrically shaped channel.

The detection element 40 is opposed to the magnetic flux generating part 24 of the second shaft member 20 via the rotation guide member 30 to detect the magnetic flux according to the rotation angle of the second shaft member 20. Thus, the rotation angle of the second shaft member 20 (and thus the rotation angle of the input rotary shaft 90) is detected. The detection axis of the detection element 40 (i.e., a center of a rotation detection) defines the center O of the rotation angle sensor 1, as illustrated in Fig. 4 (A). In the example illustrated in Fig. 4 (A), the detection axis of the detection element 40 corresponds to an original position O of a coordinate system defined by x and y axes. It is noted that the detection axis of the detection element 40 is a point at which the detection accuracy (sensitivity) becomes the best when the center 0' of the magnet (see Fig. 4 (B)) is aligned therewith, and the detection axis of the detection element 40 does not necessarily correspond to a physical center of the detection element 40. It is noted that the center O' of the magnet corresponds to the rotation center of the magnetic flux generating part 24. The detection element 40 may be a Hall element, a MR (Magneto Resistance) element (magneto-resistance effect element), etc. The detection element 40 may be in a chip form as illustrated in Fig. 4, and may be installed on a substrate 42 as illustrated in Fig. 2. An electrical signal from the detection element 40 may be input to an external apparatus (an on-vehicle ECU (Electronic Control Unit), for example) via a communication line in a cable 80.

It is noted that, in the example illustrated in Fig. 2, the rotation guide member 30 has an internal space 30a and the detection element 40 installed on the substrate 42 is disposed in the internal space 30a. The internal space 30a may be filled with a resin (epoxy resin, for example).

The lid member 50 is cylindrical-shaped, as illustrated in Fig. 1, etc., and may be formed of a resin. The lid member 50 is secured to the rotation guide member 30. For example, the lid member 50 may be secured to the rotation guide member 30 with adhesive, welding, etc. The lid member 50 accommodates the first shaft member 10 and the second shaft member 20 therein. The lid member 50 has an upper portion with an opening such that the slot 14 of the first shaft member 10 is exposed as a whole viewed from top. The lid member 50 comes in contact with the upper surface of the first shaft member 10 in the axial direction to restrain displacements of the first shaft member 10 and the second shaft member 20 with respect to the rotation guide member 30. In other words, the lid member 50 restrains the movement of the first shaft member 10 and the second shaft member 20 in the axial direction while permitting the rotation of the first shaft member 10 and the second shaft member 20. Thus, the engagement between the first shaft member 10 and the second shaft member 20 (i.e., the engagement between a key 18 and a key channel 28 described hereinafter) is maintained, and the engagement between the second shaft member 20 and the rotation guide member 30 (i.e., the engagement between the guide channel 22 and the protrusion 32) is maintained.

It is noted that, in the example illustrated in Fig. 2, the lid member 50 comes in contact with the upper surfaces 10a, 20a of the first shaft member 10 and the second shaft member 20 in the axial direction, respectively, to directly restrain the movements of the first shaft member 10 and the second shaft member 20 in the axial direction. Further, in the example illustrated in Fig. 2, the lid member 50 also comes in contact with the key 18 (described hereinafter) in the axial direction. It is noted that, the contact manner described above is an example. For example, the lid member 50 may not come in direct contact with the second shaft member 20. In this case, the lid member 50 may come in contact with the first shaft member 10 to indirectly constrain the movement of the second shaft member 20 in the axial direction.

Fig. 5 is a single item view illustrating the first shaft member 10, in which (A) is a top view, (B) is a sectional-view, (C) is a bottom view, and (D) is a side view.

The first shaft member 10 is cylindrical-shaped as a whole. The first shaft member 10 includes the slot 14 into which the input rotary shaft 90 is inserted, as described above. The slot 14 has a shape corresponding to the end portion of the input rotary shaft 90, and is substantially longer than the end portion of the input rotary shaft 90 in Y direction, as described above. The width of the slot 14 in X distance may be substantially the same as the width of the input rotary shaft 90 in X direction (i.e., there is no play between the slot 14 and the input rotary shaft 90 in X direction). In the example illustrated in Fig. 1, the end portion of the input rotary shaft 90 is cut to have two faces (obtained by cutting a cylindrical column with two parallel faces), and accordingly the slot 14 is formed to have a substantially rectangular shape. More specifically, the slot 14 defines a cylindrical column space with a predetermined radius R1 that has two faces 14a, 14b cut therein such that the faces 14a, 14b are parallel with Y direction and the axial direction. Further, the faces 14a, 14b are symmetrical with respect to a center axis of the cylindrical column space. The predetermined radius R1 is set such that the predetermined radius R1 is greater than a radius (i.e., a radius of the cylindrical column before the two faces 14a, 14b have been cut) of the end portion of the input rotary shaft 90 by an amount of necessary play, for example. It is noted that the face 14b includes a concave surface 14c; however, such a concave surface 14c may be omitted. The concave surface 14c is provided for a convex surface 90a of the input rotary shaft 90 to define the insertion orientation of the input rotary shaft 90.

It is noted that, in the example illustrated in Fig. 5, the slot 14 is a penetrating hole through the first shaft member 10 in the axial direction; however, the slot 14 may be a non-penetrating hole with a bottom. It is noted that, in the case where the slot 14 is a penetrating hole, the input rotary shaft 90 passes through the slot 14 to have a tip end surface be in contact with the upper surface of a concave portion 29 of the second shaft member 20. Again, in this case, the rotation of the input rotary shaft 90 is transmitted to the second shaft member 20 not directly but via the first shaft member 10.

The first shaft member 10 includes a key 18 on its lower side, as illustrated in Fig. 5. The key 18 extends in X direction (longitudinal in X direction). The length of the key 18 (the length in X direction) is arbitrary, but is set such that the first shaft member 10 and the second shaft member 20 can function as an Oldham's coupling described hereinafter. In the example illustrated in Fig. 5, the key 18 is formed such that the key 18 protrudes outwardly in the radius direction beyond an outline of the upper portion of the first shaft member 10.

Fig. 6 is a single item view illustrating the second shaft member 20 in which (A) is a top view and (B) is a sectional-view.

The second shaft member 20 is cylindrical-shaped as a whole. The second shaft member 20 includes the magnetic flux generating part 24 and the body part 26, and the body part 26 has the guide channel 22 formed therein on the lower side. The upper side of the body part 26 has a concave portion 29 formed therein into which the lower part of the first shaft member 10 is inserted. The concave portion 29 is formed such that the lower part of the first shaft member 10 can move in X direction to permit a relative movement between the key channel 28 and the key 18 described hereinafter.

Further, the upper side of the body part 26 has the key channel 28 formed therein in which the key 18 of the first shaft member 10 is inserted. The key channel 28 may be formed such that the depth of the key channel 28 is greater than that of the bottom surface of the concave portion 29. The key channel 28 extends in X direction (longitudinal in X direction). The length of the key channel 28 (the length in X direction) is set to be substantially greater than that of the key 18 (in X direction). In other words, the key channel 28 and the key 18 are formed such that the relative movement in X direction is permitted. The width of the key channel 28 in Y direction may be substantially the same as the width of the key 18 in Y direction (i.e., there is no play between the key channel 28 and the key 18 in Y direction). In the example illustrated in Fig. 6, the key channel 28 extends outwardly in the radius direction beyond the concave portion 29. Further, in the example illustrated in Fig. 6, the key channel 28 ends at a position that is inner in the radius direction with respect to the outline of the second shaft member 20; however, the key channel 28 may penetrate through the second shaft member 20 outwardly in the radius direction. In such a case, an inner peripheral surface of the lid member 50 may restrict the movement range of the key 18 in X direction.

Fig. 7 is a top view explaining a decentering state of the input rotary shaft 90 in Y direction with respect to the center O of the rotation angle sensor 1, in which (A) illustrates a state in which there is no decentering in X and Y directions, (B) illustrates a decentering state to one side in Y direction, and (C) illustrates a decentering state to the other side in Y direction. Fig. 8 is a top view explaining a decentering state of the input rotary shaft 90 in X direction with respect to the center O of the rotation angle sensor 1, in which (A) illustrates a decentering state to one side in X direction, and (B) illustrates a decentering state to the other side in X direction. It is noted that, in Fig. 7 and Fig. 8, for the sake of better understanding, the illustration of the lid member 50 is omitted.

In a state in which there is no decentering of the input rotary shaft 90 in X and Y directions with respect to the center O of the rotation angle sensor 1, the input rotary shaft 90 is located at the center of the slot 14 of the first shaft member 10 of the input rotary shaft 90 in Y direction, as illustrated in Fig. 7 (A).

When the input rotary shaft 90 is decentered with respect to the center O of the rotation angle sensor 1 to one side in Y direction, the input rotary shaft 90 comes to a position biased to one side in the slot 14 of the first shaft member 10 of the input rotary shaft 90, as illustrated in Fig. 7 (B). Thus, the prying due to such a decentering (i.e., the prying due to the input rotary shaft 90 in the slot 14 of the first shaft member 10) can be prevented. It is noted that, in this state, if the input rotary shaft 90 is not decentered with respect to the center O of the rotation angle sensor 1 in X direction, the key 18 of the first shaft member 10 is located at the center of the key channel 28 of the second shaft member 20 in X direction.

Similarly, when the input rotary shaft 90 is decentered with respect to the center O of the rotation angle sensor 1 to the other side in Y direction, the input rotary shaft 90 comes to a position biased to the other side in the slot 14 of the first shaft member 10 of the input rotary shaft 90, as illustrated in Fig. 7 (C). Thus, the prying due to such a decentering (i.e., the prying due to the input rotary shaft 90 in the slot 14 of the first shaft member 10) can be prevented. It is noted that, in this state, if the input rotary shaft 90 is not decentered with respect to the center O of the rotation angle sensor 1 in X direction, the key 18 of the first shaft member 10 is located at the center of the key channel 28 of the second shaft member 20 in X direction.

Further, when the input rotary shaft 90 is decentered with respect to the center O of the rotation angle sensor 1 to one side in X direction, the key 18 of the first shaft member 10 comes to a position biased to one side in the key channel 28 of the second shaft member 20, as illustrated in Fig. 8 (A). In this way, the first shaft member 10 and the second shaft member 20 form the Oldham's coupling such that the decentering of the input rotary shaft 90 with respect to the center O of the rotation angle sensor 1 to one side in X direction is permitted. In other words, the key 18 of the first shaft member 10 and the key channel 28 of the second shaft member 20 implement the integral rotation of the first shaft member 10 and the second shaft member 20 while permitting the shift in X direction between the first shaft member 10 and the second shaft member 20. It is noted that, in such a state, if the input rotary shaft 90 is not decentered with respect to the center O of the rotation angle sensor 1 in Y direction, the input rotary shaft 90 is located at the center of the slot 14 of the first shaft member 10 in Y direction.

Similarly, when the input rotary shaft 90 is decentered with respect to the center O of the rotation angle sensor 1 to the other side in X direction, the key 18 of the first shaft member 10 comes to a position biased to the other side in the key channel 28 of the second shaft member 20, as illustrated in Fig. 8 (B). In this way, the first shaft member 10 and the second shaft member 20 form the Oldham's coupling such that the decentering of the input rotary shaft 90 with respect to the center O of the rotation angle sensor 1 to the other side in X direction is permitted. It is noted that, in such a state, if the input rotary shaft 90 is not decentered with respect to the center O of the rotation angle sensor 1 in Y direction, the input rotary shaft 90 is located at the center of the slot 14 of the first shaft member 10 in Y direction.

It is noted that, in practice, the input rotary shaft 90 may be decentered with respect to the center O of the rotation angle sensor 1 in X and Y directions. In this case, the decentering in X and Y directions is permitted due to a combination of the movements illustrated in Fig. 7 and Fig. 8. In this way, it becomes possible for the rotation angle sensor 1 to include a mechanism for preventing the prying while permitting the decentering of the input rotary shaft 90 in X and Y directions.

According to the rotation angle sensor 1 of this embodiment, the following effect among others can be obtained.

As described above, by providing the first shaft member 10 and the second shaft member 20, it becomes possible to detect the rotation angle of the input rotary shaft 90 while preventing the prying even if the input rotary shaft 90 is decentered with respect to the center O of the rotation angle sensor 1 in an arbitrary direction in XY plane. Thus, the damage due to the decentering (damage due to the prying, etc.) can be reduced, which increases the durability of the rotation angle sensor 1. For example, if the first shaft member 10 and the second shaft member 20 are integrally formed, the prying occurs due to the decentering in X direction, which may cause the damage to the first shaft member 10 and the second shaft member 20. In contrast, according to the embodiment, the first shaft member 10 and the second shaft member 20 are coupled such that the relative movement in X direction is permitted (via the key 18 and the key channel 28), which can reduce the probability of such damage.

Further, according to the embodiment, even when the input rotary shaft 90 is decentered with respect to the center O of the rotation angle sensor 1 in any direction in XY plane, a state in which the rotation center of the second shaft member 20 (i.e., the rotation center of the magnetic flux generating part 24) is aligned with the center O of the rotation angle sensor 1 is kept. Specifically, due to the guide mechanism between the rotation guide member 30 and the second shaft member 20, state in which the rotation center of the second shaft member 20 is aligned with the center O of the rotation angle sensor 1 is kept. Thus, even if the input rotary shaft 90 is decentered with respect to the center O of the rotation angle sensor 1 in any direction in XY plane, it becomes possible to keep high detection accuracy of the rotation angle sensor 1.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention. Further, all or part of the components of the embodiments described above can be combined.

For example, according to the embodiment, the first shaft member 10 includes the key 18 and the second shaft member 20 includes the key channel 28; however, this may be reversed. Specifically, the first shaft member 10 may include a key channel and the second shaft member 20 may include a key.

Further, in the embodiment described above, the second shaft member 20 includes the guide channel 22 and the rotation guide member 30 includes the protrusion 32; however, this may be reversed. Specifically, the second shaft member 20 may include a protrusion and the rotation guide member 30 may include a guide channel.

Further, in the embodiment described above, the end portion of the first shaft member 10 is cut to have two faces; however, the end portion may be cut to have one face (D-cut). In this case, the slot 14 may also form the D-cut space. However, the slot 14 is formed to permit the movement (play) of the first shaft member 10 in Y direction, as described above.

Further, in the embodiment described above, the cable 80 is integrated with the rotation angle sensor 1; however, the cable 80 may be attached to the rotation angle sensor 1 afterward. In other words, the rotation angle sensor 1 may have external terminals.

### [Description of Reference Symbols]

- 1: rotation angle sensor
- 10: first shaft member
- 14: slot
- 18: key
- 20: second shaft member
- 22: guide channel
- 24: magnetic flux generating part
- 26: body part
- 28: key channel
- 30: rotation guide member
- 32: protrusion
- 40: detection element
- 42: substrate
- 50: lid member
- 90: input rotary shaft

## Claims

1. A rotation angle sensor (1), comprising:
a first shaft member (10) that holds an input rotary shaft (90) with play in a first direction (Y) to rotate with the input rotary shaft (90), the first direction (Y) being perpendicular to the input rotary shaft (90);
a second shaft member (20) that generates magnetic flux and holds the first shaft member (10) with play in a second direction (X) to rotate with the first shaft member (10), the second direction (X) being perpendicular to the input rotary shaft (90) and the first direction (Y);
a rotation guide member (30) that rotatably supports the second shaft member (20) and defines a rotation center of the second shaft member (20); and
a detection element (40) that is opposed to the second shaft member (20) via the rotation guide member (30) to detect the magnetic flux that changes according to a rotation angle of the second shaft member (20);
wherein one of the second shaft member (20) and the rotation guide member (30) has a contact surface having a guide channel (22) formed therein in a circular form viewed along an axial direction, and the other of the second shaft member (20) and the rotation guide member (30) having a contact surface with a protrusion (32) formed therein in a circular form viewed along the axial direction, the contact surfaces of the second shaft member (20) and the rotation guide member (30) being in contact with each other, the protrusion (32) being engaged with the guide channel (22) with a clearance therebetween.

2. The rotation angle sensor of claim 1, wherein the rotation guide member guides the rotation of the second shaft member such that the rotation center of the second shaft member corresponds to a detection axis of the detection element.

3. The rotation angle sensor of any one of claim 1 or claim 2, wherein the first shaft member and the second shaft member form an Oldham's coupling.

4. The rotation angle sensor of any one of claims 1 to 3, further comprising a lid member that is secured to the rotation guide member and accommodates the first shaft member and the second shaft member therein to restrain displacements of the first shaft member and the second shaft member in the axial direction with respect to the rotation guide member.

5. The rotation angle sensor of any one of claims 1 to 4, wherein the first shaft member includes a slot into which an end of the input rotary shaft is inserted, the end being cut to have two faces.

6. The rotation angle sensor of any one of claims 1 to 5, wherein the second shaft member includes a magnetic flux generating part and a body part that are integrally formed, the magnetic flux generating part generating the magnetic flux.

7. The rotation angle sensor of claim 1, wherein the circular form has a center at a position corresponding to the detection axis of the detection element.

## Patentansprüche

1. Drehwinkelsensor (1), der Folgendes umfasst:
ein erstes Wellenelement (10), das eine Eingangsdrehwelle (90) mit Spiel in einer ersten Richtung (Y) hält, um mit der Eingangsdrehwelle (90) zu drehen, wobei die erste Richtung (Y) senkrecht zu der Eingangsdrehwelle (90) ist,
ein zweites Wellenelement (20), das einen magnetischen Fluss erzeugt und das erste Wellenelement (10) mit Spiel in einer zweiten Richtung (X) hält, um mit dem ersten Wellenelement (10) zu drehen, wobei die zweite Richtung (X) senkrecht zu der Eingangsdrehwelle (90) und der ersten Richtung (Y) ist,
ein Drehführungselement (30), das das zweite Wellenelement (20) drehbar trägt und ein Drehzentrum des zweiten Wellenelements (20) definiert, und
ein Erfassungselement (40), das dem zweiten Wellenelement (20) über das Drehführungselement (30) gegenüberliegt, um den magnetischen Fluss zu erfassen, der sich gemäß einem Drehwinkel des zweiten Wellenelements (20) verändert,
wobei eines des zweiten Wellenelements (20) und des Drehführungselements (30) eine Kontaktfläche mit einem Führungskanal (22) hat, der darin, entlang einer axialen Richtung betrachtet, in Kreisform gebildet ist, und das andere des zweiten Wellenelements (20) und des Drehführungselements (30) eine Kontaktfläche mit einem Vorsprung (32) hat, der darin, entlang der axialen Richtung betrachtet, in Kreisform gebildet ist, wobei die Kontaktflächen des zweiten Wellenelements (20) und des Drehführungselements (30) miteinander in Kontakt sind, wobei der Vorsprung (32) mit dem Führungskanal (22) mit einem Zwischenraum dazwischen in Eingriff steht.

2. Drehwinkelsensor nach Anspruch 1, wobei das Drehführungselement die Drehung des zweiten Wellenelements derart führt, dass das Drehzentrum des zweiten Wellenelements einer Erfassungsachse des Erfassungselements entspricht.

3. Drehwinkelsensor nach einem der Ansprüche 1 oder 2, wobei das erste Wellenelement und das zweite Wellenelement eine Oldham-Kupplung bilden.

4. Drehwinkelsensor nach einem der Ansprüche 1 bis 3, der ferner ein Deckelelement umfasst, das an dem Drehführungselement befestigt ist und das erste Wellenelement und das zweite Wellenelement darin aufnimmt, um Verschiebungen des ersten Wellenelements und des zweiten Wellenelements in die axiale Richtung in Bezug auf das Drehführungselement zu beschränken.

5. Drehwinkelsensor nach einem der Ansprüche 1 bis 4, wobei das erste Wellenelement einen Schlitz aufweist, in den ein Ende der Eingangsdrehwelle eingesetzt ist, wobei das Ende geschnitten ist, um zwei Flächen zu haben.

6. Drehwinkelsensor nach einem der Ansprüche 1 bis 5, wobei das zweite Wellenelement einen magnetischen Fluss erzeugenden Teil und einen Körperteil hat, die einstückig gebildet sind, wobei der magnetische Fluss erzeugende Teil den magnetischen Fluss erzeugt.

7. Drehwinkelsensor nach Anspruch 1, wobei die Kreisform ein Zentrum an einer Position hat, die der Erfassungsachse des Erfassungselements entspricht.

## Revendications

1. Capteur d'angle de rotation (1), comprenant :
un premier élément d'arbre (10) qui maintient un arbre tournant d'entrée (90) avec un jeu dans une première direction (Y) pour tourner avec l'arbre tournant d'entrée (90), la première direction (Y) étant perpendiculaire à l'arbre tournant d'entrée (90) ;
un second élément d'arbre (20) qui génère un flux magnétique et maintient le premier élément d'arbre (10) avec un jeu dans une seconde direction (X) pour tourner avec le premier élément d'arbre (10), la seconde direction (X) étant perpendiculaire à l'arbre tournant d'entrée (90) et à la première direction (Y) ;
un élément de guide de rotation (30) qui supporte en rotation le second élément d'arbre (20) et définit un centre de rotation du second élément d'arbre (20) ; et
un élément de détection (40) qui est opposé au second élément d'arbre (20) via l'élément de guide de rotation (30) pour détecter le flux magnétique qui change en fonction d'un angle de rotation du second élément d'arbre (20) ;
dans lequel l'un du second élément d'arbre (20) et de l'élément de guide de rotation (30) présente une surface de contact comprenant un canal de guide (22) formé en son sein sous une forme circulaire vu le long d'une direction axiale, et l'autre du second élément d'arbre (20) et de l'élément de guide de rotation (30) présente une surface de contact avec une saillie (32) formée en son sein sous une forme circulaire vu le long de la direction axiale, les surfaces de contact du second élément d'arbre (20) et de l'élément de guide de rotation (30) étant en contact l'une avec l'autre, la saillie (32) étant en prise avec le canal de guide (22) avec un dégagement entre eux.

2. Capteur d'angle de rotation selon la revendication 1, dans lequel l'élément de guide de rotation guide la rotation du second élément d'arbre de sorte que le centre de rotation du second élément d'arbre corresponde à un axe de détection de l'élément de détection.

3. Capteur d'angle de rotation selon l'une quelconque des revendications 1 ou 2, dans lequel le premier élément d'arbre et le second élément d'arbre forment un joint d'Oldham.

4. Capteur d'angle de rotation selon l'une quelconque des revendications 1 à 3, comprenant en outre un élément de couvercle qui est fixé à l'élément de guide de rotation et accueille le premier élément d'arbre et le second élément d'arbre en son sein pour limiter les déplacements du premier élément d'arbre et du second élément d'arbre dans la direction axiale par rapport à l'élément de guide de rotation.

5. Capteur d'angle de rotation selon l'une quelconque des revendications 1 à 4, dans lequel le premier élément d'arbre comprend une fente dans laquelle une extrémité de l'arbre tournant d'entrée est insérée, l'extrémité étant coupée pour présenter deux faces.

6. Capteur d'angle de rotation selon l'une quelconque des revendications 1 à 5, dans lequel le second élément d'arbre comprend une partie de génération de flux magnétique et une partie de corps qui sont formées d'un seul tenant, la partie de génération de flux magnétique générant le flux magnétique.

7. Capteur d'angle de rotation selon la revendication 1, dans lequel la forme circulaire présente un centre au niveau d'au moins une position correspondant à l'axe de détection de l'élément de détection.
